# EUROPÄISCHE PATENTANMELDUNG

(11) **EP 3 021 159 A1**
(43) Veröffentlichungstag der Anmeldung: **18.05.2016**
(21) Anmeldenummer: 15190168.3
(22) Anmeldetag: 16.10.2015
(51) Int. Cl.: G02C 1/04

(54) **VERBINDUNGSSTRUKTUR ZUR VERBINDUNG EINES BRILLENRAHMENS UND -GLASES SOWIE BRILLE**

(30) Priorität: 11.11.2014 CN 201420669959 U
(71) Anmelder: Tony Optical Enterprises, Co. Ltd., Taipei 114 (TW)
(72) Erfinder: LIN, Juei-Tse, Taipei 114 (TW)
(74) Vertreter: Stippl, Hubert

(57) **Zusammenfassung**

In der vorliegenden Erfindung wird eine Verbindungsstruktur zur Verbindung eines Brillenrahmens und -glases einschließlich eines Brillenrahmens und zwei Brillengläser, wobei der Brillenrahmen aus einem linken und einem rechten Rahmenhälfte besteht, dadurch gekennzeichnet, dass an der Innenseite an äußeren Enden der zwei Rahmenhälfte jeweils eine Aufnahmenut angeordnet ist, mit denen jeweils ein Rotationsblock drehend verbunden ist, wobei an äußeren Enden beider Brillengläser jeweils eine Beulung vorgesehen ist, die sich in der Aufnahmenut der Rahmenhälfte befindet, wobei durch Drehung des Rotationsblocks dessen ein Ende gegen die Beulung des Brillenglases stützt und die Beulung des Brillenglases in der Aufnahmenut der Rahmenhälfte beschränkt wird, und wobei durch gegensinnige Drehung die Beschränkung des Brillenglases durch ein Ende des Rotationsblocks weggelassen wird, wobei zwischen dem Rotationsblock und dem äußeren Ende der Rahmenhälfte noch ein Federteil passend verbunden ist, das eine elastische Vorspannung auf den Rotationsblock zur Beschränkung dessen gegensinnige Drehung auswirkt, wobei zwischen dem inneren Ende des Brillenglases und dem inneren Ende der Rahmenhälfte ein trennbare Positionsstruktur eingepasst ist, sowie eine Brille bestehend aus zwei Brillenbügeln und der obenstehende Verbindungsstruktur veröffentlicht. Die vorliegende Erfindung ist bezüglich der stabilen Verbindung, guten Handhabung und einfachen Demontage vorteilhaft.

## Beschreibung

Die vorliegende Erfindung betrifft eine Verbindungsstruktur zur Verbindung eines Brillenrahmens und -glases sowie eine Brille.

### Technologischer Hintergrund

Die Brille steht mit menschlichem Leben in engem Zusammenhang. Auf dem Markt findet man die Brille mit vollem Rahmen, mit halbem Rahmen und ohne Rahmen. Darunter besteht die Brille mit halbem Rahmen aus zwei Rahmenhälften zur Installation von Brillengläsern und zur Verbindung von Brillenbügeln. Für die traditionelle Brille mit halbem Rahmen stellt zwischen einem Brillenglas und - rahmen eine feste Verbindungstruktur dar, damit es nicht günstig beim Austausch von Brillenglas oder -rahmen ist. Dafür ist aus dem Stand der Technik eine neuartige Brille mit halbem Rahmen bekannt, durch die eine lösbare Verbindung zwischen dem Brillenrahmen und -glas mittels Verrastung verwirklicht wird. Aber während der Demontage des Brillenglases ist es umständlich (mit Gewalt) und benötigt es einigermaßen Handfertigkeit bei dieser Brille mit halbem Rahmen, um das Brillenglas komplette zu demontieren. Es ist offensichtlich, nicht einfach zu montieren und demontieren, und das Brillenglas leicht beschädigt zu werden.

### Aufgabe der vorliegenden Erfindung

Die Aufgabe der vorliegenden Erfindung besteht darin, die Nachteile des Standes der Technik zu überwinden, und eine Verbindungsstruktur zur Verbindung eines Brillenrahmens und -glases sowie eine Brille anzugeben, deren Verbindung stabil, leicht handhabend, einfach ist, und wobei das Brillenglas und -rahmen nicht beschädigt werden können.

### Lösung der Aufgabe

Die vorstehende Aufgabe wird durch eine Verbindungsstruktur zur Verbindung eines Brillenrahmens und -glases einschließlich eines Brillenrahmens und zwei Brillengläser gelöst, wobei der Brillenrahmen aus einem linken und einem rechten Rahmenhälften besteht, und wobei an der Innenseite an äußeren Enden der beiden zwei Rahmenhälften jeweils eine Aufnahmenut angeordnet ist, mit denen jeweils ein Rotationsblock drehend verbunden ist, wobei an äußeren Enden beider Brillengläser jeweils eine Beulung versehen ist, die sich in der Aufnahmenut der Rahmenhälfte befindet, wobei durch Drehung des Rotationsblocks dessen ein Ende gegen die Beulung des Brillenglases stützt und die Beulung des Brillenglases in der Aufnahmenut der Rahmenhälfte beschränkt wird, und wobei durch gegensinnige Drehung die Beschränkung des Brillenglases durch ein Ende des Rotationsblocks weggelassen wird, wobei zwischen dem Rotationsblock und dem äußeren Ende der Rahmenhälfte noch ein Federteil passend verbunden ist, das eine elastische Vorspannung auf den Rotationsblock zur Beschränkung dessen gegensinnigen Drehung auswirkt, wobei zwischen dem inneren Ende des Brillenglases und dem inneren Ende der Rahmenhälfte ein trennbarer Positionsstruktur eingepasst ist.

Des Weiteren ist das Federteil eine Feder, die zwischen dem äußeren Ende der Rahmenhälfte und dem gegenüberliegenden Innenseite des anderen Endes des Rotationsblocks liegt.

Des Weiteren ist der Rotationsblock durch einen Bolzen mit dem äußeren Ende der Rahmenhälfte verbunden. Das Federteil ist als ein elastisches U-Klemmteil ausgebildet, das auf dem Bolzen aufgesetzt ist, während die beiden Enden des U-Klemmteils jeweils gegen das äußere Ende der Rahmenhälfte und den Rotationsblock stützen.

Des Weiteren ist der Rotationsblock durch einen Bolzen drehend an dem äußeren Ende der Rahmenhälfte angeschlossen. Das Federteil ist eine Drehfeder, die auf dem Bolzen aufgesetzt ist und deren beiden Ende jeweils gegen das äußere Ende der Rahmenhälfte und den Rotationsblock stützen.

Des Weiteren fasst die trennbare Positionsstruktur eine am inneren Ende des Brillenglases angeordnete und von vorne bis hinten durchgängige Rastnut und einen am inneren Ende der Rahmenhälfte angeordnete Rastvorsprung um, der in der Rastnut eingegriffen ist.

Des Weiteren ist an gegenüberliegenden Ende der Aufnahmenuten von beiden Rahmenhälften jeweils eine Öffnung versehen ist, die eine Aussparung für die Beulung des Brillenglases bildet. An der äußeren Stirnseite des Brillenglases eine Vertiefung versehen ist, wobei die Oberstruktur der Vertiefung die Beulung bildet, und wobei diese Vertiefung mit der Unterstruktur der Aufnahmenut miteinander verrastet.

Des Weiteren ist der Rotationsblock mit einer von oben bis unten durchgehenden Durchgangsöffnung zum Durchziehen des Bolzens versehen ist, wobei an einer Seite des Rotationsblocks eine ausweichende Kerbe angeordnet ist, die durch die durchgehende Durchgangsöffnung durchläuft und diese durchgehende Durchgangsöffnung in Ober- und Unterteil teilt. Die Drehfeder befindet sich in der ausweichenden Kerbe.

Des Weiteren ist der Rotationsblock mit einer von oben bis unten durchgehenden Durchgangsöffnung zum Durchziehen des Bolzens versehen ist, wobei an einer Seite des Rotationsblocks eine ausweichende Kerbe angeordnet ist, die durch die durchgehende Durchgangsöffnung durchläuft und diese durchgehende Durchgangsöffnung in Ober- und Unterteil teilt. Das elastische Klemmteil ist in der ausweichenden Kerbe eingepasst.

Des Weiteren ist an der anderen Seite des Rotationsblocks ein rutschfester Streifen vorgesehen, der sich an einer der Aufnahmenut abgewandte Seite befindet. Eine Brille einschließlich zwei Brillenbügel sowie einer Verbindungsstruktur zur Verbindung eines Brillenrahmens und -glases, wobei die vorderen Enden von zwei Brillenbügeln jeweils am äußeren Ende der zwei Rahmenhälften angeschlossen sind.

Die vorteilhaften Auswirkungen der vorliegenden Erfindung stellen dar, dass gemäß der vorliegenden Erfindung an den Innenseiten von äußeren Enden der zwei Rahmenhälfte Aufnahmenuten vorgesehen sind und an den Seite von äußeren Enden von beiden Brillengläsern entsprechend Beulungen vorgesehen sind, wobei die Beulungen der Brillengläser in den Aufnahmenuten aufgenommen sind, während an äußeren Rahmen der zwei Rahmenhälfte jeweils ein Rotationsblock drehend angeschlossen ist, wobei durch Drehung des Rotationsblocks dessen ein Ende die Beulung des Brillenglases in der Aufnahmenut der Rahmenhälfte begrenzt, sodass es nur Drehung in gegensinnige Richtung des Rotationsblocks nötig ist, eine Ende des Rotationsblocks von der Beulung des Brillenglases weg zu bewegen und der Beulung des Brillenglases einen Platz abzutreten, dadurch das Brillenglas vom Brillenrahmen demontierbar ist, wenn gemäß der vorliegenden Erfindung ein Brillenglas demontiert werden muss. Gemäß der vorliegenden Erfindung ist ein Federteil zwischen dem Rotationsblock und dem äußeren Ende der Rahmenhälfte verbunden, mit dem eine elastische Vorspannung zur Begrenzung der gegensinnigen Drehung des Rotationsblocks auf das Rotationsblock entsteht, dadurch nach Montage des Brillenglases der Rotaionsblokk besser in der Zustand zur Begrenzung des Brillenglases bleiben kann, damit eine unabsichtliche Drehung vermeidbar ist und die Verbindung zwischen beiden Teilen stabiler steht. Darüber hinaus erhält man auch nach Montage des Federteils besseres Tastgefühl. Deswegen ist im Vergleich mit dem Stand der Technik die vorliegende Erfindung durch stabile Verbindung, gutes Tastgefühl, einfache und kraftsparende Montage und Demontage des Brillenglases sowie guten Schutz für Brillenglas und -rahmen gekennzeichnet.

### Beschreibung der Erfindung anhand von Ausführungsbeispielen

In Anlehnung an Figuren und Ausführungsbeispielen wird die vorliegende Erfindung weiterhin angegeben. Aber die Verbindungsstruktur zur Verbindung eines Brillenrahmens und -glases sowie eine Brille gemäß der vorliegenden Erfindung sind nicht auf diese Ausführungsbeispiele beschränkt.

Diese zeigen:
- Fig.1: eine Explosionsansicht eines Ausführungsbeispiels der orliegenden Erfindung;
- Fig.2: eine schematische vergrößerte Ansicht des A-Teils in Fig.1;
- Fig.3: eine zusammengebaute strukturelle schematische Ansicht gemäß erstem Ausführungsbeispiel der vorliegenden Erfindung;
- Fig.4: eine schematische strukturelle Ansicht des Rotationsblocks gemäß zweitem Ausführungsbeispiel der vorliegenden Erfindung;
- Fig.5: eine schematische Explosionsansicht des Rotationsblocks und der Drehfeder gemäß dritten Ausführungsbeispiel der vorliegenden Erfindung;
- Fig.6: eine schematische Explosionsansicht des Rotationsblocks und des elastischen Klemmteils gemäß vierten Ausführungsbeispiel der vorliegenden Erfindung;
- Fig. 7: eine schematische strukturelle Ansicht von zusammengebautem Rotationsblock mit dem elastischen Klemmteil gemäß viertem Ausführungsbeispiel der vorliegenden Erfindung.

### Ausführungsbeispiel 1

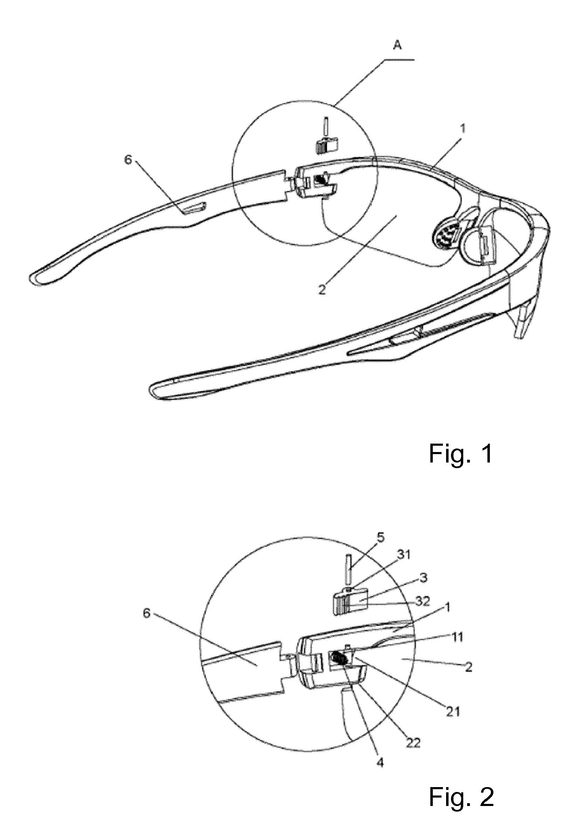

Die Ausführungsbeispiele, siehe Fig.1-3, in der vorliegenden Erfindung stellen eine Verbindungsstruktur zur Verbindung eines Brillenrahmens und -glases dar, einschließlich eines Brillenrahmens und zwei Brillengläser 2, wobei der Brillenrahmen aus einem linken und einem rechten Rahmenhälfte 1 besteht, wobei an der Innenseite an äußeren Enden der zwei Rahmenhälfte 1 jeweils eine Aufnahmenut 11 angeordnet ist, mit denen jeweils ein Rotationsblock 3 drehend verbunden ist, wobei an äußeren Enden beider Brillengläser 2 jeweils eine Beulung 21 vorgesehen ist, die 21 sich in der Aufnahmenut 11 der Rahmenhälfte 1 befindet, wobei durch Drehung des Rotationsblocks 3 dessen ein Ende gegen die Beulung 21 des Brillenglases 2 stützt und die Beulung 21 des Brillenglases 2 in der Aufnahmenut 11 der Rahmenhälfte 1 beschränkt wird, und wobei durch gegensinnige Drehung die Beschränkung des Brillenglases 2 durch ein Ende des Rotationsblocks weggelassen wird, wobei zwischen dem Rotationsblock 3 und dem äußeren Ende der Rahmenhälfte 1 noch ein Federteil passend verbunden ist, das eine elastische Vorspannung auf den Rotationsblock 3 zur Beschränkung dessen gegensinnige Drehung auswirkt, wobei zwischen dem inneren Ende des Brillenglases 2 und dem inneren Ende der Rahmenhälfte 1 ein trennbare Positionsstruktur eingepasst ist.

Im Einzelnen ist an gegenüberliegenden Enden der Aufnahmenut 11 der beiden Rahmenhälften 1 jeweils eine Öffnung vorgesehen, somit der Beulung 21 des Brillenglases 2 einen Platz abtritt. Am äußeren Stirnseite des Brillenglases 2 ist eine Vertiefung 22 vorgesehen, wobei die Oberstruktur der Vertiefung 22 die Beulung 21 bildet, und wobei die Vertiefung 22 mit der Unterseite der Aufnahmenut 11 verrastet.

Als ein bevorzugtes Ausführungsbeispiel ist das Federteil eine Feder 4, wobei diese Feder 4 zwischen dem äußeren Ende der Rahmenhälfte 1 und der gegenüberliegenden Seite eines Endes des Rotationsblocks 3 verbunden ist. Dieser beschriebene Rotationsblock 3 ist durch einen Bolzen 5 drehend am äußeren Ende der Rahmenhälfte 1 anschließt. Die Feder 4 ist sich zwischen dem äußeren Ende der Rahmenhälfte 1 und der gegenüberliegenden Seite eines anderen Endes des Rotationsblocks 3 angepasst. Hierbei kann der Bolzen 5 entweder einen Zapfen ohne Gewinde oder eine Schraube sein. Konkretisiert ist in der Mittenposition des Rotationsblocks 3 eine von oben bis unten durchgängige Bohrung 31 vorgesehen, wobei der Bolzen 5 durch die Bohrung 31 läuft, dessen beide Ende jeweils in die oberen und unteren Ende der Aufnahmenut 11 stecken, dadurch der Rotationsblock 3 um den Bolzen 5 drehen kann. Die Feder 4 liegt sich zwischen der Aufnahmenut 11 und dem anderen Ende des Rotationsblocks 3.

Als ein bevorzugtes Ausführungsbeispiel fasst die trennbare Positionsstruktur eine von vorne bis hinten durchgängige Rastnut, die am inneren Ende des Brillenglases 2 angeordnet ist, und einen Rastvorsprung um, der am inneren Ende der Rahmenhälfte 1 angeordnet ist, wobei der Rastvorsprung mit der Rastnut verrastet.

Als ein bevorzugtes Ausführungsbeispiel ist an der anderen Stirnseite des Rotationsblocks 3 ein rutschfester Streifen 32 vorgesehen, der 32 an der der Aufnahmenut 11 abgewandte Seite liegt.

Die vorliegende Erfindung betrifft eine Verbindungsstruktur zur Verbindung eines Brillenrahmens und -glases. Bei Montage des Brillenglases 2 ist das andere Ende des Rotationsblocks 3 mit Hand zu drücken, um die Federkraft der Feder 4 zu überwinden und ein Ende des Rotationsblocks 3 aus der Aufnahmenut 11 auszudrehen. Dann wird die Beulung 21 am äußeren Ende des Brillenglases 2 in der Aufnahmenut 11 der Rahmenhälfte 1 aufgenommen, damit die Rastnut am inneren Ende des Brillenglases 2 mit dem Rastvorsprung am inneren Ende der Rahmenhälfte verrastet. Zum Schluss wird der Rotationsblock 3 von der Hand freigelassen, wobei der Rotationsblock 3 unter der Rückstellkraft von Feder 4 in die Richtung zum inneren Ende der Aufnahmenut 11 soweit dreht, bis dessen ein Ende gegen die Beulung 21 des Brillenglases 2 stützt und die Beulung 21 des Brillenglases 2 fest in der Aufnahmenut 11 der Rahmenhälfte 1 beschränkt, um das Brillenglas 2 mit Brillenrahmen miteinander stabil in Verbindung zu stehen. Bei Demontage des Brillenglases 2 wird ebenfalls das andere Ende des Rotationsblocks 3 von der Hand gedrückt, um die Federkraft der Feder 4 zu überwinden, damit der Rotationsblock 3 in umgekehrter Richtung dreht und dessen ein Ende aus der Aufnahmenut 11 mitgenommen wird, um die Beschränkungswirkung auf die Beulung 21 des Brillenglases 2 wegzulassen. Anschließend wird die Beulung 21 des Brillenglases 2 aus der Aufnahmenut 11 der Rahmenhälfte 1 bewegt und gleichzeitig wird die Rastnut am inneren Ende des Brillenglases 2 mit der Beulung am inneren Ende der Rahmenhälfte 1 zu trennen entrastet, dadurch das Brillenglas 2 leicht demontier ist.

Wie Figur 1-3 gezeigt sind, die vorliegende Erfindung betrifft eine Brille einschließlich zwei Brillenbügel 6 und der oben genannten Verbindungsstruktur zur Verbindung eines Brillenrahmens und -glases, wobei die vorderen Enden von beiden Brillenbügeln jeweils drehend am äußeren Enden der beiden Rahmenhälften 1 angeschlossen sind.

### Ausführungsbeispiel 2

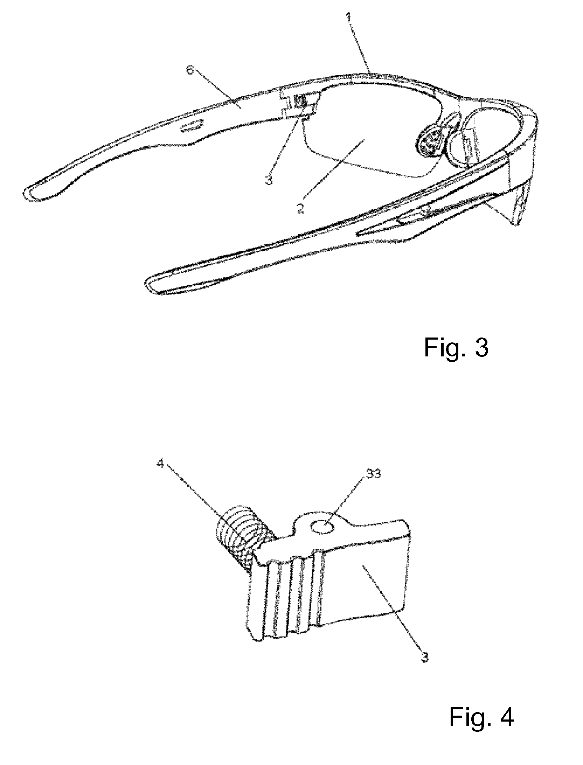

Wie in Fig.4 gezeigt ist, betrifft die vorliegende Erfindung eine Verbindungsstruktur zur Verbindung eines Brillenrahmens und -glases, die sich von dem ersten Ausführungsbeispiel dadurch unterscheidet, dass an der oberen und unteren Seite in der Mittenposition des Rotationsblocks 3 jeweils eine halbkugelige Beulung 33 vorgesehen ist, wobei diese beiden Beulungen 33 in einer gemeinsamen Achse liegen, und dass an der inneren Oberfläche und Bodenfläche der Aufnahmenut 11 jeweils eine axiale Bohrung vorgesehen ist, wobei die beiden Beulungen 33 jeweils drehend in die beide axiale Bohrungen der Aufnahmenut 11 eingesteckt sind, sodass der Rotationsblock 3 um die Achse drehbar sind, in der die beiden Beulungen 33 liegen.

Die Verbindungsstruktur zur Verbindung eines Brillenrahmens und -glases kann auch andere Struktur zum Anschließen an dem äußeren Ende der Rahmenhälfte 1 verwenden, um die Rotationsfunktion des Rotationsblocks 3 zu verwirklichen. z.B. kann am Rotationsblock 3 auch eine axiale Bohrung vorgesehen ist. Am äußeren Ende der Rahmenhälfte ist ein Bolzen 5 entsprechend angeordnet.

Eine Brille gemäß der vorliegenden Erfindung fasst zwei Brillenbügel und eine obengenannte Verbindungsstruktur zur Verbindung eines Brillenrahmens und - glases, wobei die vorderen Enden von beiden Brillenbügeln jeweils an äußeren Enden der beiden Rahmenhälften angeschlossen sind.

### Ausführungsbeispiel 3

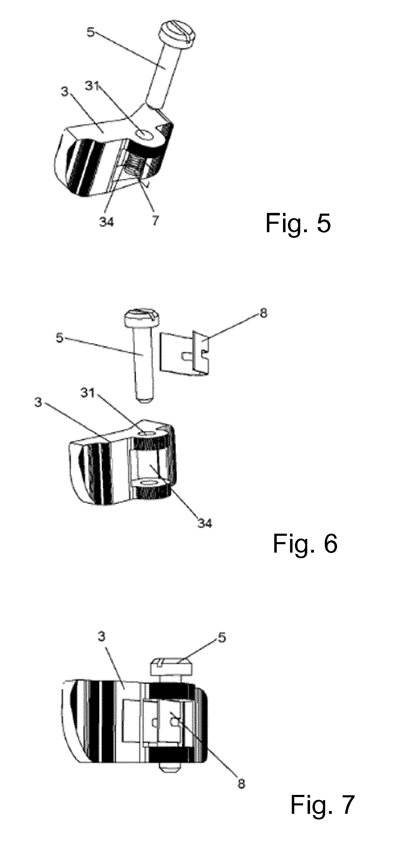

Wie in Fig.5 gezeigt ist, betrifft die vorliegende Erfindung eine Verbindungstruktur zur Verbindung eines Brillenrahmens und -glases, die sich vom ersten Ausführungsbeispiel dadurch unterscheidet, dass das Federteil eine Drehfeder 7 ist, wobei diese Drehfeder 7 auf dem Bolzen 5 des Rotationsblock 3 aufgesteckt ist, deren beiden Ende jeweils gegen das äußere Ende (die innere Seite von der Aufnahmenut 11) der Rahmenhälfte 1 und beschriebenen Rotationsblock 3 stützen. Vorzugsweise ist an der Seite der Mittenposition des Rotationsblocks 3 eine ausweichende Kerbe 34 angeordnet. Diese ausweichende Kerbe 34 läuft durch die Durchgangsöffnung 31 des Rotationsblocks 3 und teilt die Durchgangsöffnung 31 in oberen und unteren Teil. Das Spiralteil der Drehfeder 7 befindet sich in der ausweichenden Kerbe 34.

Die Verbindungsstruktur zur Verbindung eines Brillenrahmens und -glases gemäß der vorliegenden Erfindung ist gleich mit dem ersten Ausführungsbeispiel, Bei Montage des Brillenglases 2 ist das andere Ende des Rotationsblocks 3 mit Hand zu drücken, um die Torsion der Drehfeder 7 zu überwinden und ein Ende des Rotationsblocks 3 aus der Aufnahmenut 11 auszudrehen. Dann wird die Beulung 21 am äußeren Ende des Brillenglases 2 in der Aufnahmenut 11 der Rahmenhälfte 1 aufgenommen, damit die Rastnut am inneren Ende des Brillenglases 2 mit dem Rastvorsprung am inneren Ende der Rahmenhälfte verrastet. Zum Schluss wird der Rotationsblock 3 von der Hand freigelassen, wobei der Rotationsblock 3 unter der Rückstellkraft von Drehfeder 7 in die Richtung zum inneren Ende der Aufnahmenut 11 soweit dreht, bis dessen ein Ende gegen die Beulung 21 des Brillenglases 2 stützt und die Beulung 21 des Brillenglases 2 fest in der Aufnahmenut 11 der Rahmenhälfte 1 beschränkt, um das Brillenglas 2 mit Brillenrahmen miteinander stabil in Verbindung zu stehen.

Bei Demontage des Brillenglases 2 wird ebenfalls das andere Ende des Rotationsblocks 3 von der Hand gedrückt, um die Torsion der Drehfeder 7 zu überwinden, damit der Rotationsblock 3 in umgekehrter Richtung dreht und dessen ein Ende aus der Aufnahmenut 11 mitgenommen wird, um die Beschränkungswirkung auf die Beulung 21 des Brillenglases 2 wegzulassen. Anschließend wird die Beulung 21 des Brillenglases 2 aus der Aufnahmenut 11 der Rahmenhälfte 1 bewegt und gleichzeitig wird die Rastnut am inneren Ende des Brillenglases 2 mit der Beulung am inneren Ende der Rahmenhälfte 1 zu trennen entrastet, dadurch das Brillenglas 2 leicht demontier ist.

Eine Brille gemäß der vorliegenden Erfindung fasst zwei Brillenbügel und eine obengenannte Verbindungsstruktur zur Verbindung eines Brillenrahmens und - glases, wobei die vorderen Enden von beiden Brillenbügeln jeweils an äußeren Enden der beiden Rahmenhälften angeschlossen sind.

### Ausführungsbeispiel 4

Wie in der Fig. 6 und 7 dargestellt ist, betrifft die vorliegende Erfindung eine Verbindungstruktur zur Verbindung eines Brillenrahmens und -glases, die sich vom ersten Ausführungsbeispiel dadurch unterscheidet, dass das Federteil ein U-förmiges elastisches Klemmteil 8 ist, wobei das elastische Klemmteil 8 auf dem Bolzen des Rotationsblocks 3 aufgesteckt ist, dessen beide Ende jeweils gegen das äußere Ende der Rahmenhälfte 1 und den Rotationsblock 3 stützen. Ähnlich wie das zweite Ausführungsbeispiel ist an der Seite der Mittenposition des Rotationsblocks 3 eine ausweichende Kerbe 34 vorgesehen. Diese ausweichende Kerbe 34 läuft durch die Durchgangsöffnung 31 des Rotationsblocks 3 und teilt die Durchgangsöffnung 31 in oberen und unteren Teil, wobei das elastische Klemmteil 8 sich in der ausweichenden Kerbe 34 anpasst.

Bei der Verbindungsstruktur zur Verbindung eines Brillenrahmens und -glases gemäß der vorliegenden Erfindung ist bei Montage des Brillenglases 2 das andere Ende des Rotationsblocks 3 mit Hand zu drücken, um die Federkraft des elastischen Klemmteils 8 zu überwinden und ein Ende des Rotationsblocks 3 aus der Aufnahmenut 11 auszudrehen. Dann wird die Beulung 21 am äußeren Ende des Brillenglases 2 in der Aufnahmenut 11 der Rahmenhälfte 1 aufgenommen, damit die Rastnut am inneren Ende des Brillenglases 2 mit dem Rastvorsprung am inneren Ende der Rahmenhälfte verrastet. Zum Schluss wird der Rotationsblock 3 von der Hand freigelassen, wobei der Rotationsblock 3 unter der Rückstellkraft von dem elastischen Klemmteil 8 in die Richtung zum inneren Ende der Aufnahmenut 11 soweit dreht, bis dessen ein Ende gegen die Beulung 21 des Brillenglases 2 stützt und die Beulung 21 des Brillenglases 2 fest in der Aufnahmenut 11 der Rahmenhälfte 1 beschränkt, um das Brillenglas 2 mit Brillenrahmen miteinander stabil in Verbindung zu stehen.

Bei Demontage des Brillenglases 2 wird ebenfalls das andere Ende des Rotationsblocks 3 von der Hand gedrückt, um die Federkraft des elastischen Klemm- teils 7 zu überwinden, damit der Rotationsblock 3 in umgekehrter Richtung dreht und dessen ein Ende aus der Aufnahmenut 11 mitgenommen wird, um die Beschränkungswirkung auf die Beulung 21 des Brillenglases 2 wegzulassen. Anschließend wird die Beulung 21 des Brillenglases 2 aus der Aufnahmenut 11 der Rahmenhälfte 1 bewegt und gleichzeitig wird die Rastnut am inneren Ende des Brillenglases 2 mit der Beulung am inneren Ende der Rahmenhälfte 1 zu trennen entrastet, dadurch das Brillenglas 2 leicht demontier ist.

Eine Brille gemäß der vorliegenden Erfindung fasst zwei Brillenbügel und eine obengenannte Verbindungsstruktur zur Verbindung eines Brillenrahmens und - glases, wobei die vorderen Enden von beiden Brillenbügeln jeweils an äußeren Enden der beiden Rahmenhälften angeschlossen sind.

Die obenstehenden Ausführungsbeispiele dienen nur zur weiteren Erklärung der Verbindungsstruktur zur Verbindung eines Brillenrahmens und -glases gemäß der vorliegenden Erfindung. Aber die vorliegende Erfindung wird nicht nur auf die obenstehenden Ausführungsbeispiele beschränkt. Jede einfache Änderung, gleichwertige Änderung und Modifikation gegenüber den obenstehenden erfindungsgemäßen Ausführungsbeispielen nach dem technischen Prinzip fallen unter dem Schutzbereich für die technischen Konzepte der vorliegenden Erfindung.

## Patentansprüche

1. Eine Verbindungsstruktur zur Verbindung eines Brillenrahmens und - glases einschließlich eines Brillenrahmens und zwei Brillengläser, wobei der Brillenrahmen aus einem linken und einem rechten Rahmenhälfte besteht, **dadurch gekennzeichnet, dass** an der Innenseite an äußeren Enden der zwei Rahmenhälfte jeweils eine Aufnahmenut angeordnet ist, mit denen jeweils ein Rotationsblock drehend verbunden ist, wobei an äußeren Enden beider Brillengläser jeweils eine Beulung vorgesehen ist, die sich in der Aufnahmenut der Rahmenhälfte befindet, wobei durch Drehung des Rotationsblocks dessen ein Ende gegen die Beulung des Brillenglases stützt und die Beulung des Brillenglases in der Aufnahmenut der Rahmenhälfte beschränkt wird, und wobei durch gegensinnige Drehung die Beschränkung des Brillenglases durch ein Ende des Rotationsblocks weggelassen wird, wobei zwischen dem Rotationsblock und dem äußeren Ende der Rahmenhälfte noch ein Federteil passend verbunden ist, das eine elastische Vorspannung auf den Rotationsblock zur Beschränkung dessen gegensinnige Drehung auswirkt, wobei zwischen dem inneren Ende des Brillenglases und dem inneren Ende der Rahmenhälfte ein trennbare Positionsstruktur eingepasst ist.

2. Eine Verbindungsstruktur zur Verbindung eines Brillenrahmens und - glases nach Anspruch 1, **dadurch gekennzeichnet, dass** das Federteil eine Feder ist, die zwischen dem äußeren Ende der Rahmenhälfte und der gegenüberliegende Innenseite des anderen Endes des Rotationsblocks verbunden ist.

3. Eine Verbindungsstruktur zur Verbindung eines Brillenrahmens und - glases nach Anspruch 1, **dadurch gekennzeichnet, dass** der Rotationsblock durch einen Bolzen drehend am äußeren Ende der Rahmenhälfte angeschlossen ist, wobei das Federteil ein elastisches U-Klemmteil ist, das auf den Bolzen aufsteckt und dessen beiden Ende gleichzeitig jeweils gegen das äußere Ende der Rahmenhälfte und den Rotationsblock stützen.

4. Eine Verbindungsstruktur zur Verbindung eines Brillenrahmens und - glases nach Anspruch 1, **dadurch gekennzeichnet, dass** der Rotationsblock durch einen Bolzen drehend am äußeren Ende der Rahmenhälfte angeschlossen ist, wobei das Federteil eine Drehfeder ist, die auf dem Bolzen aufsteckt und deren beiden Ende jeweils gegen das äußere Ende der Rahmenhälfte und den Rotationsblock stützen.

5. Eine Verbindungsstruktur zur Verbindung eines Brillenrahmens und - glases nach Anspruch 1, **dadurch gekennzeichnet, dass** die trennbare Positionsstruktur fasst eine am inneren Ende des Brillenglases angeordnete und von vorne bis hinten durchgängige Rastnut sowie einen am inneren Ende der Rahmenhälfte angeordneten Rastvorsprung um, wobei der Rastvorsprung mit der Rastnut verrastet.

6. Eine Verbindungsstruktur zur Verbindung eines Brillenrahmens und - glases nach Anspruch 1, **dadurch gekennzeichnet, dass** an gegenüberliegenden Enden von den Aufnahmenuten der beiden Rahmenhälfte jeweils eine Öffnung vorgesehen ist, die der Beulung des Brillenglases ausweicht, wobei an der äußeren Stirnseite des Brillenglases eine Vertiefung vorgesehen ist, deren Oberstruktur die Beulung bildet, wobei die Vertiefung mit der Unterstruktur der Aufnahmenut verrastet.

7. Eine Verbindungsstruktur zur Verbindung eines Brillenrahmens und - glases nach Anspruch 3, **dadurch gekennzeichnet, dass** der Rotationsblock mit einer von oben bis unten durchgängige Durchgangsöffnung zum Durchziehen des Bolzens versehen ist, wobei an einer Seite des Rotationsblocks eine ausweichende Kerbe vorgesehen ist, die durch die Durchgangsöffnung läuft und die Durchgangsöffnung in Ober- und Unterteil teilt, wobei die Drehfeder sich mit ihrem Spiralteil in der ausweichenden Kerbe befindet.

8. Eine Verbindungsstruktur zur Verbindung eines Brillenrahmens und - glases nach Anspruch 4, **dadurch gekennzeichnet, dass** der Rotationsblock mit einer von oben bis unten durchgängige Durchgangsöffnung zum Durchziehen des Bolzens versehen ist, wobei an einer Seite des Rotationsblocks eine ausweichende Kerbe vorgesehen ist, die durch die Durchgangsöffnung läuft und die Durchgangsöffnung in Ober- und Unterteil teilt, wobei das elastische Klemmteil in der ausweichenden Kerbe eingepasst ist.

9. Eine Verbindungsstruktur zur Verbindung eines Brillenrahmens und - glases nach Anspruch 1, **dadurch gekennzeichnet, dass** an der anderen Seite des Rotationsblocks rutschfesten Streifen vorgesehen ist, der sich an einer der Aufnahmenut abgewandten Seite befindet.

10. Eine Brille mit zwei Bügeln, **dadurch gekennzeichnet, dass** die Brille fasst noch eine Verbindungsstruktur zur Verbindung eines Brillenrah-mens und -glases nach einem der Ansprüche 1 bis 9, wobei die vorderen Ende der beiden Bügel jeweils an den äußeren Enden der beiden Rahmenhälften angeschlossen sind.
